# DEMANDE DE BREVET EUROPEEN

(11) **EP 0 610 112 A1**
(43) Date de publication de la demande: **10.08.1994**
(21) Numéro de dépôt: 94400136.1
(22) Date de dépôt: 24.01.1994
(51) Int. Cl.: B62D 55/21

(54) **Dispositif d'axe d'articulation pour chenille de véhicule à connecteurs articulés**

(30) Priorité: 01.02.1993 FR 9301026
(71) Demandeur: HUTCHINSON, F-75008 Paris (FR)
(72) Inventeur: Boni, Bernard, F-95660 Champagne-Sur-Oise (FR); Casse, Christian, F-75013 Paris (FR); Lecour, Pierre, F-94270 Bicetre (FR)
(74) Mandataire: Orès, Bernard

(57) **Abrégé**

Axe d'articulation pour chenille de véhicule à connecteurs articulés comportant un axe proprement dit et des blocs (30,36) de caoutchouc ou matériau élastomère analogue comprimés après montage de l'axe (11, 12) dans le ou les maillon(s) (10) de la chenille.

Les blocs (30, 36) de caoutchouc ou matériau élastomère analogue règnent sur toute la longueur de l'axe et sont disposés en deux ensembles coaxiaux avec interposition entre eux d'un tube métallique (35), les blocs (30) du premier ensemble étant solidarisés sur la surface externe (32) de l'axe (11, 12) tandis que les blocs (36) du deuxième ensemble sont solidarisés de la surface externe (38) du tube intermédiaire (35).

## Description

L'invention concerne un dispositif d'axe d'articulation pour chenille de véhicule à connecteurs articulés.

Les chenilles connues de véhicules ou engins motorisés, aussi bien ceux du domaine civil comme des engins de travaux publics, que ceux du domaine militaire, comme des chars de combat, sont constituées par des maillons assemblés entre eux par des liaisons dites à "axes secs" ou, en variante, par des connecteurs, la chenille étant, dans ce dernier cas, constituée par des maillons percés de forages ou alésages traversants dans lesquels sont montés à force des axes d'articulations reliés entre eux par des connecteurs rigides (voir, par exemple, FR-2 623 767). Dans une configuration usuelle, les connecteurs sont disposés, -pour certains d'entre eux qui portent une dent d'entraînement-, entre deux maillons adjacents, et pour les autres, à l'extérieur desdits maillons. Une telle réalisation de chenille présente l'avantage, par rapport aux chenilles à "axes secs", de procurer une double articulation entre les maillons et, par conséquent, une souplesse accrue lors du franchissement d'obstacles. En outre, lorsque les axes sont munis de blocs de caoutchouc, ceux-ci permettent d'absorber une rotation relative des axes par rapport aux maillons, par une déformation en cisaillement du caoutchouc, contrairement à l'assemblage des chenilles à "axes secs" où la rotation se fait par frottement.

Nonobstant leurs avantages par rapport aux chenilles à "axes secs", notamment en ce qui concerne la fiabilité (absence de risque de fissuration de l'oeil des maillons), la diminution des vibrations (particulièrement importante lorsque les véhicules emportent des appareils électroniques ou autres sensibles auxdites vibrations) et leur "signature acoustique", les chenilles à connecteurs présentent cependant des inconvénients de prix, de possible déformation en traction et d'une durée de vie insuffisante des axes d'articulations par rapport à la durée de vie souhaitée pour la chenille, avec pour conséquence des périodes d'immobilisation des engins qu'elles équipent et des frais d'entretien. On constate en outre, dans de tels dispositifs, une dégradation rapide du caoutchouc mis en oeuvre, -et par suite de l'axe lui-même-, sous l'effet des déformations cycliques qui lui sont appliquées, ces déformations engendrant un échauffement de l'élastomère compte tenu du phénomène d'hystérésis.

Si la Demanderesse a déjà apporté des perfectionnements aux dispositifs d'axes qui viennent d'être décrits en proposant, dans FR-A-2 623 767, un axe à blocs élastiques de caoutchouc comprimés qui règnent sur une partie seulement de la longueur de l'axe en étant disposés sur celui-ci uniquement en des zones correspondant au voisinage des faces frontales latérales du ou des maillon(s) dans la condition de montage de l'axe dans le ou les maillon(s), il est apparu que de meilleures performances encore pouvaient être obtenues pour des dispositifs d'axes d'articulation pour chenille de véhicule à connecteurs articulés eu égard à la souplesse en torsion et à la rigidité en traction, notamment.

Le problème ainsi posé, de fournir un dispositif d'axe d'articulation pour chenille à connecteurs articulés à grande souplesse en torsion, à grande rigidité en traction, dans lequel l'énergie thermique engendrée en cours de fonctionnement soit faible, dont la durée de vie soit importante et qui, en outre, puisse être mis en oeuvre sans modifier les autres éléments constitutifs de la chenille, en particulier les caractéristiques de dimensionnement, notamment d'épaisseur des maillons imposées par les constructeurs de véhicules, est résolu selon l'invention par le fait que les blocs élastiques de caoutchouc ou matériau élastomère analogue qui règnent sur toute la longueur de l'axe étant disposés suivant deux ensembles coaxiaux avec interposition entre eux d'un tube métallique, les caoutchoucs ou matériaux élastomères constitutifs des premier et second ensembles ou "adhérites" sont différents, notamment en ce qui concerne leurs caractéristiques mécaniques et, en particulier, leur module de cisaillement, les blocs du premier ensemble ou premières "adhérites" étant solidaires de la surface externe de l'axe tandis que les blocs du deuxième ensemble ou secondes "adhérites" sont solidaires de la surface externe du tube métallique.

On obtient ainsi la souplesse en torsion souhaitée, qui permet un bon enroulement de la chenille autour des galets, de la poulie de tension et du barbotin, de même que le franchissement satisfaisant d'aspérités ou d'obstacles du sol avec la raideur en traction qui est requise, quant à elle, pour assurer un bon engrènement des couronnes de barbotin et éviter les risques de déchenillage (à la suite d'un trop grand allongement de la chenille).

Les premières "adhérites" peuvent, le cas échéant, être également rendues solidaires de la surface interne du tube métallique et les secondes "adhérites" peuvent, quant à elles, être rendues solidaires des maillons dans lesquels sont logés les axes d'articulation, pour s'opposer à un éventuel glissement longitudinal des "adhérites".

L'invention prévoit également que le rapport des modules de cisaillement des matériaux constitutifs des premières et secondes "adhérites" ait une valeur de l'ordre de 1,2/0,8.

Dans une réalisation préférée, les premières "adhérites" sont en un matériau à base de polyisoprène ou de caoutchouc naturel d'une dureté d'environ 68 Shore A, et d'un module de cisaillement d'environ 1,2 MPa, tandis que les secondes "adhérites" sont en un matériau à base de polyisoprène ou de caoutchouc naturel d'une dureté de l'ordre de 55 Shore A et d'un module de cisaillement d'environ 0,8 MPa.

Selon une autre caractéristique de l'invention, le ou les matériau(x) constitutif(s) des premières et secondes "adhérites" sont choisis parmi ceux présentant une excellente tenue à la fatigue, une très bonne résistance à la rupture, une faible DRC (déformation résiduelle à la compression) et une bonne résilience (tg δ inférieure à 0,20).

Selon encore une autre caractéristique de l'invention, aussi bien le nombre des premières que des secondes "adhérites" qui sont réparties presque à touche-touche sur toute la longueur de l'axe, -à l'exception bien entendu des zones de ce dernier qui coopèrent avec les connecteurs-, que leur forme sont choisis pour limiter les précontraintes qui résultent de l'emmanchement à force de l'axe dans les maillons.

Dans une réalisation préférée, les "adhérites" en caoutchouc ou matériau élastomère analogue ont une section droite sensiblement trapézoïdale dont la grande base est solidarisée à l'axe proprement dit, pour les premières adhérites et au tube métallique intermédiaire, pour les secondes, les premières "adhérites" étant également, le cas échéant, solidarisées au tube métallique intermédiaire, tandis que les secondes sont, le cas échéant, solidarisées aux maillons.

D'autres caractéristiques et avantages de l'invention apparaîtront de la description qui suit, faite à titre d'exemple et en référence au dessin annexé dans lequel :
- la figure 1 est une vue schématique, en perspective, d'une partie de chenille équipée de connecteurs ;
- la figure 2 est une vue schématique de dessus avec arrachements, correspondante ;
- la figure 3 est une vue schématique explicative illustrant la structure d'un axe d'articulation selon l'invention avant montage et pour deux étapes de fabrication dudit axe ;
- la figure 4 est une vue en coupe d'un axe d'articulation selon l'invention monté dans deux maillons.

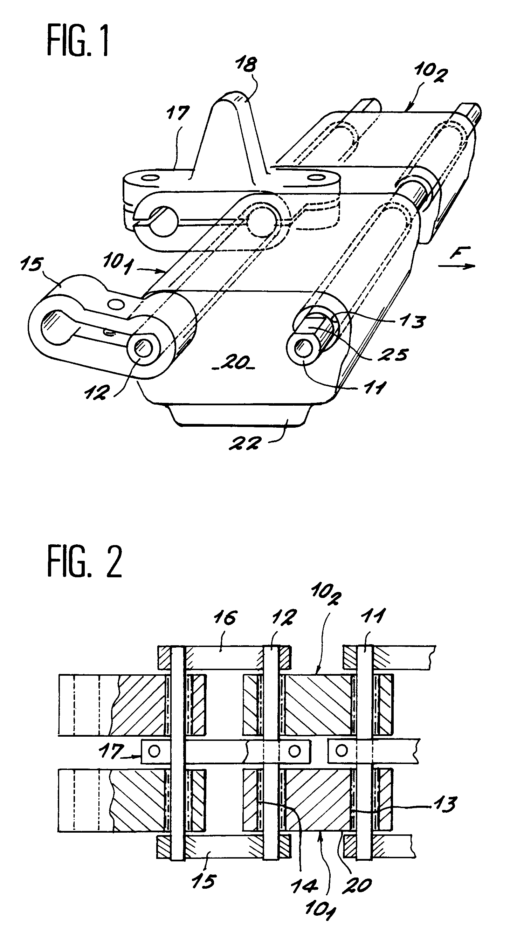

On se réfère d'abord à la figure 1 qui illustre la structure d'une chenille de véhicule à connecteurs articulés. Celle-ci est constituée de maillons 10₁ et 10₂ portant un patin de caoutchouc ou analogue 22 sur leur face inférieure destinée à venir au contact du sol, et qui sont réunis entre eux par des axes d'articulation 11 et 12 logés dans des forages ou alésages traversants 13 et 14 des maillons dirigés sensiblement perpendiculairement à la direction d'enroulement de la chenille sur le barbotin, montrée par la flèche F. Les extrémités des axes 11 et 12, extérieures aux maillons, sont reliées entre elles, -sur les faces frontales latérales 20 des maillons de la chenille-, par des connecteurs rigides 15 et 16, figures 1 et 2, tandis que des connecteurs centraux 17, disposés entre les maillons 10₁, 10₂ et portant chacun une dent d'entraînement 18, chevauchent les axes 11 et 12 dans leur partie médiane.

Dans les réalisations de chenilles à connecteurs articulés connues, les axes 11 et 12, emmanchés à force dans les forages traversants 13 et 14 des maillons 10, sont munis de manchons de caoutchouc ou matériau élastomère analogue désignés dans la technique sous le nom "d'adhérites" et qui, constitués par des bagues à section droite rectangulaire sont placés à distance les uns des autres suivant la longueur de l'axe à l'exception, bien entendu, des parties de ce dernier prévues pour coopérer avec les connecteurs 15, 16 ou 17. La souplesse en torsion de telles articulations qui procure les débattements en rotation nécessaires au contournement du barbotin, des poulies de renvoi et/ou des galets de l'ensemble moteur du véhicule équipé de telles chenilles, ont pour corollaire une certaine souplesse en traction qui est elle-même à l'origine d'une déformation en traction trop importante laquelle peut se traduire par un allongement de la chenille suffisamment grand pour entraîner un éventuel déchenillage. Une autre conséquence de la souplesse en traction est celle des pertes d'énergie dûes à ces déformations en traction provoquant une dégradation relativement importante des blocs de caoutchouc et, par suite, de l'axe lui-même, par l'énergie thermique engendrée dans les adhérites lors du fonctionnement de la chenille en raison de l'hystéréris du caoutchouc.

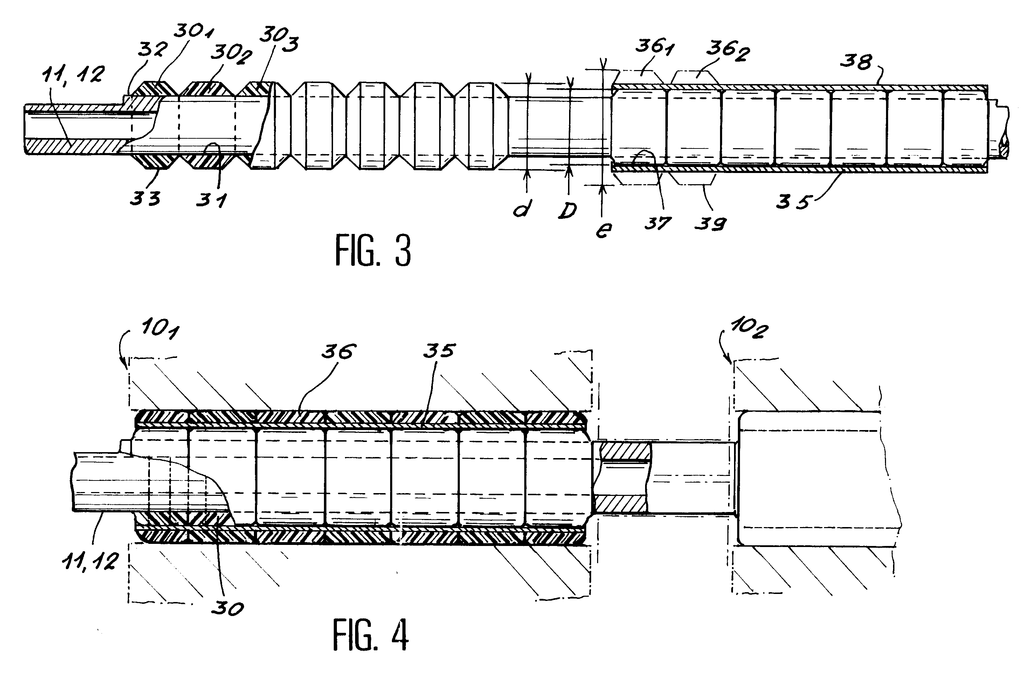

Pour pallier ces inconvénients, sans porter atteinte à la souplesse en torsion de l'articulation, d'une part, sans diminuer la durée de vie, d'autre part, et, enfin, sans modifier les autres éléments constitutifs de la chenille, en particulier le dimensionnement des corps matricés entrant dans la constitution des maillons 10, l'invention propose qu'à chaque axe d'articulation 11, 12 constitué en tant qu'axe creux, à méplat d'extrémité 25 pour la fixation des connecteurs externes 15 et 16, soient associés deux ensembles d'adhérites séparées entre elles par un tube métallique intermédiaire, figures 3 et 4.

De façon plus précise, l'invention propose de garnir les axes creux 11, 12, d'un jeu de premières adhérites 30₁, 30₂, 30₃, etc... (figure 3) disposées presque à touche-touche sur l'axe 11, 12, chaque adhérite qui est un bloc annulaire de caoutchouc ou matériau élastomère analogue étant conformée suivant une section droite quelque peu trapézoïdale dont la surface interne, -qui correspond à celle de la base de grande dimension 31-, est adhérisée sur la surface externe 32 de l'axe 11, 12. Comme montré sur la figure 3, le diamètre externe d des adhérites 30 à l'état libre est légèrement supérieur au diamètre interne D d'un tube métallique 35 sur lequel sont fixées de secondes adhérites 36₁, 36₂, etc... en caoutchouc ou matériau élastomère analogue d'une forme semblable à celle des adhérites 30 et qui sont disposées, elles aussi, sur toute la longueur du tube 35, sensiblement à touche-touche, en étant adhérisées par leur surface interne 37 sur la surface externe 38 du tube métallique 35. Comme pour les premières adhérites 30, le diamètre externe à l'état libre, e, des adhérites 36 est légèrement supérieur au diamètre interne des alésages 13, 14 des maillons 10 de sorte que lorsque l'axe 11, 12 qui comporte les premières et secondes adhérites est emmanché à force dans les alésages 13, 14 des maillons les secondes adhérites 36 sont mises en précontrainte, en occupant la quasi-totalité du volume de l'alésage, de même que les adhérites 30 sont mises en précontrainte dans le tube métallique intermédiaire 35 dont elles occupent, elles aussi, figure 4, la quasi-totalité du volume.

La forme à contour généralement trapézoïdal de la section droite des adhérites 30, 36, de même que leur nombre et la répartition à touche-touche proposée permettent, après que le tube 35 garni des adhérites 36 a été monté sur l'axe 11, 12 garni des adhérites 30 et coaxialement audit axe à l'aide d'une douille à passage conique, puis montage de l'axe dans les maillons, de conserver à un niveau aussi faible que possible les contraintes de Von Mises dans le caoutchouc ou matériau élastomère analogue dont sont constituées lesdites adhérites, tout en tirant parti de la précontrainte introduite qui constitue un élément favorable d'amélioration de la tenue en fatigue de l'axe, d'une part et d'accroissement de sa rigidité en traction, d'autre part.

Dans une forme de réalisation, les adhérites 30 sont solidarisées par leur surface externe 33 au tube 35 et les adhérites 36 sont solidarisées par leur surface externe 39 aux maillons.

Si les matériaux constitutifs des adhérites 30 et des adhérites 36 sont avantageusement l'un et l'autre à base de polyisoprène ou de caoutchouc naturel présentant une excellente tenue à la fatigue, une très bonne résistance à la rupture, une faible DRC (déformation résiduelle à la compression) et une bonne résilience (tg δ inférieure à 0,20) ils sont cependant choisis pour présenter des caractéristiques mécaniques différentes, le module de cisaillement du matériau élastomère des adhérites 30 étant choisi supérieur à celui des adhérites 36, principalement pour que les durées de vie des premières et secondes adhérites soient les mêmes nonobstant le fait qu'elles sont soumises à des contraintes différentes.

Dans une exécution d'un axe selon l'invention, dont chaque portée a une longueur de 230 mm environ et est garnie de 14 adhérites, chacune à section droite d'allure trapézoïdale dont la grande base est fixée au tube métallique intermédiaire 35 ou à l'axe creux 11, 12 en étant disposées sensiblement à touche-touche, le matériau des premières "adhérites" étant choisi parmi les caoutchoucs naturels d'une dureté de 68 Shore A, avec un module de cisaillement d'environ 1,2 MPa, tandis que celui des secondes "adhérite" est un caoutchouc naturel d'une dureté de 55 Shore A et d'un module de cisaillement d'environ 0,8 MPa on constate, lors des essais, que la durée de vie de l'axe est supérieure à celle des réalisations connues, sans que soit diminuée la souplesse en torsion, mais avec augmentation, par contre de la raideur en traction qui peut atteindre environ 80 % et diminution de l'énergie thermique dissipée en cours d'utilisation.

Bien que l'invention ait été décrite en référence à une chenille à maillons 10₁ et 10₂ adjacents, il va de soi qu'elle n'y est nullement limitée et qu'elle trouve application aux chenilles à maillons simples, sans connecteur central ou, en variante, aux chenilles à plus de deux maillons adjacents et ainsi à plusieurs connecteurs centraux.

## Revendications

1. Axe d'articulation pour chenille de véhicule à connecteurs articulés, comportant un axe proprement dit et des blocs (30, 36) de caoutchouc ou matériau élastomère analogue comprimés après montage de l'axe (11, 12) dans le ou les maillon(s) (10) de la chenille, lesdits blocs qui règnent sur toute la longueur de l'axe étant disposés en deux ensembles coaxiaux avec interposition entre eux d'un tube métallique (35), caractérisé en ce que les caoutchoucs ou matériaux élastomères constitutifs des premier et second ensembles ou premières et secondes "adhérites" (30, 36) sont différents, notamment en ce qui concerne leurs caractéristiques mécaniques et en ce que les premières "adhérites" (30) sont solidarisées sur la surface externe (32) de l'axe tandis que les secondes "adhérites" (36) sont solidarisées de la surface externe (38) du tube intermédiaire (35).

2. Axe d'articulation selon la revendication 1, caractérisé en ce que le rapport des modules de cisaillement des matériaux constitutifs des premières et secondes "adhérites" (30, 36) est de l'ordre de 1,2/0,8.

3. Axe d'articulation selon l'une quelconque des revendications précédentes, caractérisé en ce que les premières "adhérites" (30) sont en un matériau à base de polyisoprène ou de caoutchouc naturel d'une dureté d'environ 68 Shore A et d'un module de cisaillement d'environ 1,2 MPa, tandis que les secondes "adhérites" (36) sont en un matériau à base de polyisoprène ou de caoutchouc naturel d'une dureté de l'ordre de 55 Shore A et d'un module de cisaillement d'environ 0,8 MPa.

4. Axe d'articulation selon l'une quelconque des revendications 1 à 3, caractérisé en ce que les matériaux constitutifs des premières et secondes "adhérites" (30, 36) sont choisis parmi ceux présentant une excellente tenue à la fatigue, une très bonne résistance à la rupture, une faible DRC (déformation résiduelle à la compression) et une bonne résilience (tg δ inférieure à 0,20).

5. Axe d'articulation selon l'une quelconque des revendications 1 à 4, caractérisé en ce qu'aussi bien le nombre des premières que des secondes "adhérites" (30, 36) qui sont réparties presque à touche-touche sur toute la longueur de l'axe (11, 12), -à l'exception des zones de ce dernier qui coopèrent avec les connecteurs (15, 16, 17)-, que leur forme sont choisis pour limiter les précontraintes qui résultent de l'emmanchement à force de l'axe (11, 12) dans les maillons (10).

6. Axe d'articulation selon l'une quelconque des revendications précédentes, caractérisé en ce que les "adhérites" (30, 36) ont une section droite sensiblement trapézoïdale dont la grande base (31, 37) est au contact de l'axe proprement dit (11, 12) ou du tube métallique intermédiaire (35) avec lesquels elles sont solidarisées.

7. Axe d'articulation selon la revendication 1, caractérisé en ce que les premières "adhérites" (30) sont également solidarisées du tube métallique (35) par leur surface externe (33) et en ce que les secondes "adhérites" (36) sont solidarisées des maillons (10) par leur surface externe (39).
